# EUROPÄISCHE PATENTSCHRIFT

(11) **EP 0 581 030 B1**
(45) Veröffentlichungstag und Bekanntmachung des Hinweises auf die Patenterteilung: **23.08.1995**
(21) Anmeldenummer: 93110324.6
(22) Anmeldetag: 29.06.1993
(51) Int. Cl.: B60R 13/10

(54) **Fälschungssicherer Kennzeichnungsträger für Kraftfahrzeuge**
Tamperproof licence number holder for vehicles
Support d'immatriculation pour véhicules protégé contre la falsification

(30) Priorität: 24.07.1992 DE 4224552
(43) Veröffentlichungstag der Anmeldung: 02.02.1994
(73) Patentinhaber: Herbst, Gustav, D-81545 München (DE)
(72) Erfinder: Herbst, Gustav, D-81545 München (DE)
(74) Vertreter: Lehmann, Klaus, Dipl.-Ing.

(56) Entgegenhaltungen:
- DE-A- 2 831 587
- DE-C- 3 902 729
- FR-A- 2 632 566
- US-A- 4 368 979

## Beschreibung

Die Erfindung betrifft einen fälschungssicheren Kennzeichnungsträger für Kraftfahrzeuge entsprechend dem Oberbegriff des Anspruchs 1. Ein solcher Kennzeichnungsträger ist zum Beispiel aus der DE-PS 28 31 587 bekannt.

Bei einem solchen Kennzeichnungsträger handelt es sich vor allem um ein Kennzeichnungsschild für Kraftfahrzeuge oder eine Zulassungs- oder Prüfplakette für Kraftfahrzeuge, ganz allgemein aber auch um andere Schilder oder Plaketten, die fälschungssicher und nicht wiederverwendbar ausgebildet sein sollen.

Dieser Kennzeichnungsträger, der durch die Farbschicht als ganzes einen bestimmten Farbton (auch weiß) zeigt, wird mittels einer Kleberschicht (nach dem Abziehen einer zuvor auf dieser angebrachten Schutzschicht, insbesondere eines Schutzpapiers) auf eine Unterlage, insbesondere auf ein Kennzeichenschild oder von innen auf die Scheibe eines Kraftfahrzeuges aufgeklebt. Bei einem Versuch, den Kennzeichnungsträger von dieser Unterlage wieder abzulösen, zum Beispiel mittels einer zwischen Trägerfolie und Unterlage im Bereich der Kleberschicht eingeführten, insbesondere angewärmten Klinge oder Schneide, löst sich die Trägerfolie (gegebenenfalls unter Zerlegung in einzelne Segmente, sofern die Trägerfolie segmentiert ist) von der Kleberschicht ab, wobei mit der Kleberschicht wesentliche Teile des Kennzeichnungsaufdrucks an der Unterlage verbleiben. Der Kennzeichnungsaufdruck wird also zerstört oder mindestens verzerrt oder verformt, so daß das ursprüngliche Bild des Kennzeichnungsaufdrucks nicht wieder herstellbar ist und den Fälschungsversuch erkennbar macht.

Zusätzlich zu dem Kennzeichnungsaufdruck ist ein Raster zwischen dem Kennzeichnungsträger und der Kleberschicht vorgesehen. Durch diesen Raster wurde die Fälschungssicherheit bereits verbessert.

Wenn neben einem mechanischen Angriff zum Ablösen des Kennzeichnungsträgers auch einfache Lösungsmittel eingesetzt werden, wird der Kennzeichnungsaufdruck durch solche Lösungsmittel zusätzlich angegriffen und zerstört.

Der Erfindung liegt die Aufgabe zugrunde, die Fälschungssicherheit des Kennzeichnungsträgers weiter zu verbessern.

Hierzu ist erfindungsgemäß entsprechend dem kennzeichnenden Teil des Anspruchs 1 die Farbschicht in einem zu dem Raster komplementären Muster unterbrochen. Die zwischen den Unterbrechungen vorhandenen Farbbereiche des Rasters überdecken also die Unterbrechungen der Farbschicht bzw. überdecken umgekehrt die Farbbereiche der Farbschicht die Unterbrechungen des Rasters. Damit ist also nicht mehr eine geschlossene, durchgehende Farbschicht vorhanden, längs derer die Trägerfolie mit dem Kennzeichnungsaufdruck ggf. unzerstört von der Unterlage abgelöst werden könnte. Wenn diese Farbschicht vollflächig, also ohne Unterbrechungen, zwischen dem Kennzeichnungsaufdruck und der Kleberschicht angebracht wäre, würde eine Möglichkeit bestehen, den Kennzeichnungsträger zusammen mit dem Aufdruck möglicherweise unzerstört abzuheben, indem man eine Schneide oder Klinge längs der Kleberschicht oder der Farbschicht einführt. Durch die Unterbrechungen in der Farbschicht ist dagegen sichergestellt, daß diese selbst einerseits beim Ablöseversuch zerstört wird und daß andererseits Teile des Kennzeichnungsaufdruckes, die durch die Unterbrechungen der Farbschicht hindurch mit dem Raster oder mit der Kleberschicht in Verbindung stehen, beim Ablöseversuch an dem Raster oder an der Kleberschicht haften bleiben. Der Kennzeichnungsaufdruck wird also beim Ablöseversuch mit Sicherheit zerstört, so daß der Kennzeichnungsträger nicht wieder herstellbar und nicht mißbräuchlich verwendbar ist.

Vorzugsweise können die Farbschicht und der Raster den gleichen Farbton aufweisen, so daß sich von der Ansichtsseite her die Wirkung einer einheitlichen farbigen Fläche ergibt.

Dabei ist es gemäß Anspruch 3 vorteilhaft, wenn die Farbbereiche des Rasters und die Farbbereiche der Farbschicht sich gegenseitig geringfügig überlappen, so daß eine gegenseitige Überlappung der Unterbrechungen des Rasters und der Unterbrechungen der Farbschicht nicht auftreten kann. Fehlstellen im Gesamtfarbbild sind damit vermieden.

In Weiterbildung der Erfindung gemäß Anspruch 4 kann die Farbschicht auf den Kennzeichnungsaufdruck und der Raster auf die Farbschicht aufgedruckt sein. Hierdurch wird die Fälschungssicherheit weiter verbessert, insbesondere wenn Farbschicht und Raster entsprechend weiteren Erfindungsmerkmalen aus unterschiedlich stark haftenden Materialien bestehen (Ansprüche 5 und 6).

Vorteilhaft kann zwischen der Trägerfolie und dem Kennzeichnungsaufdruck eine nicht haftende Trennschicht vorgesehen sein, die ein Ablösen des Kennzeichnungsaufdrucks mit der Trägerfolie verhindert (Anspruch 7). Wenn hierbei gemäß Anspruch 8 ein Randbereich der Trägerfolie ringsum frei von der Trennschicht ist, verbinden sich die nachfolgend aufgedruckten Schichten (insbesondere Farbschicht und/oder Raster) am Randbereich unmittelbar mit der Trägerfolie. Dadurch ist sichergestellt, daß bei Angriff von Wasser (Regen, Schnee, Waschanlagen) der Kennzeichnungsträger nicht von der Unterlage abgelöst bzw. der Kennzeichnungsaufdruck nicht erreicht und zerstört wird. Dabei ist durch eine gemäß Anspruch 14 ringsum am Rand geschlossene Ausbildung der Farbschicht für einen Fälscher ein Anreiz gegeben, den Kennzeichnungsträger mittels einer Schneide abzulösen. Wenn er dann zu den unterbrochenen Bereichen der Farbschicht vordringt, wird der Kennzeichnungsträger und insbesondere dessen Kennzeichnungsaufdruck jedoch zerstört, ohne daß hierfür ein zusätzliches Lösungsmittel notwendig wäre. Bei Einsatz eines Lösungsmittels (Wasser oder organisches Lösungsmittel wie Benzin) würde nach einem solchen Angriff der Kennzeichnungsaufdruck erst recht zerstört.

Unter einer Farbschicht ist im Rahmen der Erfindung nicht nur eine in einem bestimmten Farbton eingefärbte Schicht zu verstehen, sondern auch eine weiße, farblose oder transparente Schicht, die im übrigen aber die Eigenschaften der erfindungsgemäßen unterbrochenen Farbschicht aufweist.

Ein Ausführungsbeispiel der Erfindung wird im folgenden anhand der Zeichnung beschrieben:
- Fig. 1: zeigt in stark vergrößertem Maßstab im Querschnitt einen Abschnitt eines erfindungsgemäßen Kennzeichnungsträgers.
- Fig. 2: zeigt einen noch weiter vergrößerten Ausschnitt aus Fig. 1.

Zur Verdeutlichung des Aufbaus sind die Dicken der dargestellten Schichten und auch deren Abstände voneinander stark übertrieben gezeichnet.

Der Kennzeichnungsträger besteht aus einer Trägerfolie 1, die in einzelne Segmente 1a unterteilt sein kann, aber nicht sein muß. An der Unterseite oder Rückseite trägt die Folie gegebenenfalls eine Trägerschicht 3, die zum Zusammenhalt der Segmente 1a dient und die, sofern erforderlich, nach dem Aufkleben der Trägerfolie 1 bzw. des Kennzeichnungsträgers auf eine Unterlage von dem Kennzeichnungsträger abgezogen werden kann. Die Trägerschicht 3 kann demgemäß aus Papier oder Kunststoff-Folie bestehen. Wenn sie nicht abziehbar sein soll, kann hierfür auch eine Lackschicht (farblos oder eingefärbt) verwendet werden.

Auf die Trägerfolie 1 ist vorzugsweise zunächst eine Schicht eines Trennlacks 4 aufgedruckt, der das Ablösen der Folie 1 von den im folgenden zu beschreibenden Schichten und von einer Kleberschicht 9 erleichtert. Die Trennschicht 4 kann aus Klarlack oder ähnlichem bestehen. Sie verleiht der Folie 1 eine verminderte Haftfähigkeit gegenüber den nachfolgend zu beschreibenden Schichten und gegenüber der Kleberschicht 9.

Auf die Trägerfolie 1 bzw. auf die Trennschicht 4 ist zunächst ein Kennzeichnungsaufdruck 7 aufgedruckt, der aus einzelnen Kennzeichnungsteilen 7a und dazwischen freibleibenden, nicht bedruckten Bereichen 7b besteht. Der Kennzeichnungsaufdruck 7 ergibt das gewünschte Kennzeichnungsbild.

Über dem Kennzeichnungsaufdruck 7 ist auf die Trägerfolie 1 eine Farbschicht 13 aufgedruckt. Diese weist einzelne Farbelemente 13a auf, zwischen denen Unterbrechungen 13b freibleiben. Die Trennschicht 4 läßt ringsum einen Randbereich der Trägerfolie 1 frei. In diesem Bereich ist die Farbschicht 13 mit einem ringsum durchgehenden Randbereich 13c ausgebildet, der somit unmittelbar auf die Trägerfolie 1 aufgedruckt ist. Da die Farbschicht 13 aus einem an benachbarten Schichten haftenden Material besteht, ist somit eine innige Verbindung zwischen der Farbschicht 13 und der Trägerfolie 1 gegeben.

Über die Farbschicht 13 ist auf die Trägerfolie 1 ein Raster 5 aufgedruckt, der Farbbereiche 5a und dazwischen freibleibende Unterbrechungen 5b aufweist. Der Raster 5 ist in einem zu der Farbschicht 13 komplementären Muster unterbrochen. Dies bedeutet, daß die Farbbereiche oder Farbelemente 5a des Rasters 5 den Unterbrechungen 13b der Farbschicht 13 entsprechen und diese abdecken, während umgekehrt die Unterbrechungen 5b des Rasters 5 den Farbbereichen 13a der Farbschicht 13 entsprechen, so daß durch die komplementären Muster der Farbschicht 13 und des Rasters 5 insgesamt eine durchgehende Fläche gebildet ist. Die Farbschicht 13 und der Raster 5 können vorzugsweise den gleichen Farbton aufweisen, so daß sich von der Ansichtsseite her optisch das Bild einer einheitlichen, geschlossenen farbigen Fläche mit dem geforderten Farbton ergibt.

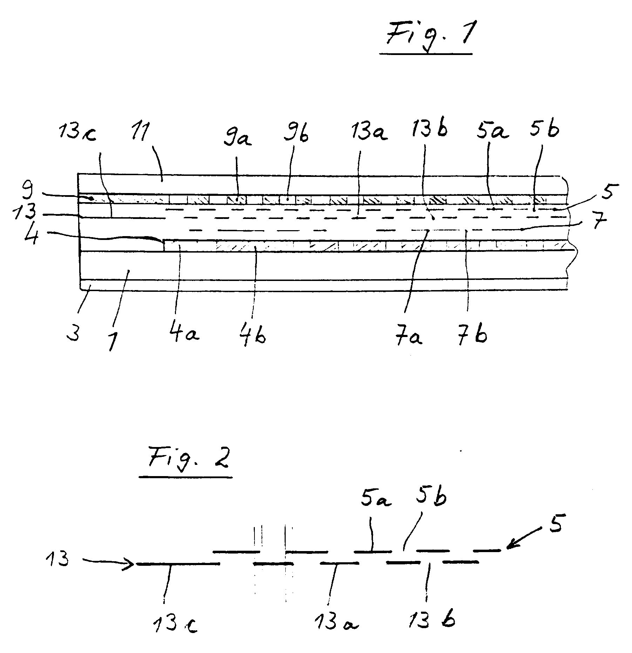

Wie in Fig. 2 gezeigt ist, können die Farbelemente 5a des Rasters 5 die Farbbereiche 13a der Farbschicht 13 geringfügig überlappen, so daß auf jeden Fall sichergestellt ist, daß sich optisch eine geschlossene farbige Fläche ergibt, ohne daß sich an den Grenzbereichen der Unterbrechungen 13b der Farbschicht und der Unterbrechungen 5b des Rasters 5 farbfreie Bereiche ergeben.

Die Rasterelemente 5a oder die Farbbereiche 13a können jeweils miteinander in Verbindung stehen und so geschlossene, mit Unterbrechungen 5b bzw. 13b versehene Flächen bilden. Jedes Rasterelement 5a oder jeder Farbbereich 13a kann aber auch von den benachbarten Rasterelementen 5a oder den Farbbereichen 13a vollständig getrennt sein, so daß dann die Unterbrechungen 5b um die Rasterelemente 5a herum bzw. die Unterbrechungen 13b um die Farbbereiche 13a herum miteinander in Verbindung stehen.

Die Rasterelemente 5a bestehen vorzugsweise aus einem wasserlöslichen Material, während die Elemente des Kennzeichnungsaufdrucks 7a vorzugsweise aus einem nicht wasserlöslichen, dagegen aber in einfachen organischen Lösungsmitteln, wie Benzin, löslichem Material bestehen. Die Farbbereiche 13a der Farbschicht 13 bestehen vorzugsweise aus gegen einfache Lösungsmittel im wesentlichen beständigen Materialien oder aus einem Material, das gegen andere Lösungsmittel empfindlich ist als der Raster 5. Durch diese unterschiedlichen Löslichkeiten wird die Fälschungssicherheit bzw. die Anfälligkeit gegen Zerstörungen bei Angriffen mit unterschiedlichen Lösungsmitteln verbessert.

Während die Farbschicht 13 vorzugsweise aus einem an den benachbarten Schichten haftenden Material besteht, kann der Raster 5 aus einem an den benachbarten Schichten nicht oder nur wenig haftenden Material bestehen. Vorzugsweise liegt hierbei die Haftstärke des Rasters 5 zwischen derjenigen der Trennschicht 4 und derjenigen der Farbschicht 13. Durch diese unterschiedlichen Haftstärken wird die Zerstörungsanfälligkeit gegen mechanische Angriffe verbessert.

Die Trennschicht 4 kann ebenfalls mit Unterbrechungen 4b zwischen einzelnen Trennschichtelementen 4a gebildet sein. Hierdurch kann die Haftfähigkeit bzw. Trennwirkung der Trennschicht 4 gezielt beeinflußt werden, so daß einzelne Teile der darüber aufgebrachten Schichten mehr und andere Teile weniger an der Trägerfolie 1 haften.

Die Haftung der Schichten über die Trennschicht 4 an der Trägerfolie 1 wird ferner vermindert und die Zerstörungsanfälligkeit verbessert, wenn auch die Trennschicht 4 gegen einfache Lösungsmittel, wie Wasser oder Benzin, empfindlich ist.

Eine prinzipiell gleichwertige Sicherheit bzw. Anfälligkeit gegenüber Fälschungsversuchen ergibt sich auch dann, wenn nach dem Kennzeichnungsaufdruck 7 zunächst der Raster 5 und erst anschließend die Farbschicht 13 auf die Trägerfolie 1 aufgedruckt wird, wenn also die Farbschicht 13 dann unmittelbar mit der Kleberschicht 9 in Verbindung steht. Je nach der Reihenfolge des Schichtaufbaus des Kennzeichnungsträgers liegen entweder einzelne Farbelemente 13a oder einzelne Rasterelemente 5a auf dem Kennzeichnungsaufdruck 7a, während andere Farbelemente 13a oder Rasterelemente 5a in den Unterbrechungen des Kennzeichnungsaufdruckes 7 liegen und somit unmittelbar mit der Trennschicht 4 oder, falls diese mit Unterbrechungen 4b versehen ist, unmittelbar mit der Trägerfolie 1 in Berührung stehen. Auf jeden Fall weicht das Muster der Rasterelemente 5a und das Muster der Farbelemente 13a von dem Bild des Kennzeichnungsaufdrucks 7a ab, so daß, allgemein gesagt, einzelne Elemente aller Schichten 7, 13, 5 unmittelbar mit der Trennschicht 4 und/oder der Trägerschicht 1 in Berührung stehen.

Die abschließend aufgebrachte Kleberschicht 9 steht einerseits mit einzelnen Farbelementen 5a des Rasters 5 und andererseits mit einzelnen Farbelementen 13a der Farbschicht 13 in Verbindung und haftet an diesen. Dabei kann auch die Kleberschicht 9 mit Unterbrechungen 9b versehen sein, so daß nur einzelne Kleberbereiche oder Kleberpunkte 9a verbleiben. Auch hierdurch kann der Zusammenhalt der einzelnen Schichten gezielt beeinflußt bzw. geschwächt werden. Wegen der Unterbrechungen 9b in der Kleberschicht 9 kommt man bei einem Ablöseversuch schnell an die Rasterelemente 5a heran, die sich leicht auflösen.

Zusammenfassend ergibt sich also ein mehrschichtiger, insgesamt unregelmäßig unterbrochener und ungleichmäßig haftender Aufbau mit unterschiedlichen Lösungsmittelempfindlichkeiten. Dieser Aufbau ist gegen Fälschungsversuche besonders empfindlich und nach einem Ablöseversuch nicht wieder herstellbar.

Die Kleberschicht 9 deckt alle darunterliegenden Teile des Kennzeichnungsträgers ab. Vor dem Aufkleben auf eine Unterlage (Kennzeichenschild, Fensterscheibe eines Kraftfahrzeugs) ist die Kleberschicht 9 mit einer Schutzschicht 11, insbesondere einem Schutzpapier abgedeckt. Diese Schicht wird vor dem Aufkleben abgezogen, so daß der Kennzeichnungsträger mittels der Kleberschicht 9 auf der Unterlage befestigt wird. In der zeichnerischen Darstellung entspricht die Unterlage der vorher abgezogenen Schutzschicht 11, so daß mit dieser Bezugsziffer 11 auch die Unterlage gekennzeichnet ist.

Da der Randbereich der Trägerfolie 1 bzw. des Kennzeichnungsträgers frei von der Trennschicht 4 und von Kennzeichnungsaufdruck 7 und/oder Raster 5 ist, liegt dort die haftende Farbschicht 13 mit ihrem Randbereich 13c unmittelbar an der Trägerfolie 1 an. Die an der Rückseite der Farbschicht 13 befindliche Kleberschicht 9 hält dann über die Farbschicht 13 den Randbereich der Trägerfolie 1 besonders fest an der Unterlage, wodurch ein Ablöseversuch weiter erschwert ist.

Schließlich kann mindestens eine der Schichten des Gesamtaufbaus, insbesondere die Trennschicht 4 mit Bestandteilen versehen sein, die gegen UV-Licht empfindlich sind und/oder die unter UV-Licht erkennbar sind. Durch gegen UV-Licht empfindliche Bestandteile altert der Kennzeichnungsträger im Lauf der Zeit, so daß auch hierin ein Fälschungen erschwerendes Merkmal liegt. Wenn die Trägerschicht unter UV-Licht erkennbare Bestandteile enthält, können Kontrollorgane mit entsprechenden UV-Lampen feststellen, ob der Kennzeichnungsträger echt oder gefälscht ist.

Es kann auch in mindestens einer der Schichten des Gesamtaufbaus, insbesondere in der Trennschicht 4, in dem Kennzeichnungsaufdruck 7, in dem Raster 5 und/oder in der Farbschicht 13, ein elektronisch programmierbares und/oder ein elektronisches lesbares Element angebracht sein, beispielsweise in Form eines Chips oder eines Magneten. Der Begriff "elektronisch" umfaßt hierbei auch alle elektrischen und magnetischen Vorgänge. Solche Elemente können individuell mit bestimmten Markierungen oder Kennzeichnungen versehen werden, die durch geeignete Mittel erkennbar oder lesbar sind und die auch mit geeigneten Mitteln wieder gelöscht oder verändert werden können. Auch mit solchen Mitteln lassen sich Fälschungen des Kennzeichnungsträgers erkennen und nachweisen.

## Patentansprüche

1. Fälschungssicherer Kennzeichnungsträger für Kraftfahrzeuge, bestehend aus einer Tragerfolie (1), auf die ein Kennzeichnungsaufdruck (7), ein Raster (5) und eine Farbschicht (13) aufgedruckt sind, mit einer diese Schichten abdeckenden Kleberschicht (9), dadurch **gekennzeichnet**, daß die Farbschicht (13) in einem zu dem Raster (5) komplementären Muster unterbrochen ist.

2. Kennzeichnungsträger nach Anspruch 1, dadurch **gekennzeichnet**, daß die Farbschicht (13) und der Raster (5) den gleichen Farbton aufweisen.

3. Kennzeichnungsträger nach Anspruch 1, dadurch **gekennzeichnet**, daß die Farbelemente (5a) des Rasters (5) und die Farbbereiche (13a) der Farbschicht (13) sich gegenseitig geringfügig überlappen.

4. Kennzeichnungsträger nach Anspruch 1, dadurch **gekennzeichnet**, daß die Farbschicht (13) auf den Kennzeichnungsaufdruck (7) und der Raster (5) auf die Farbschicht (13) aufgedruckt ist.

5. Kennzeichnungsträger nach einem der Ansprüche 1 bis 4, dadurch **gekennzeichnet**, daß die Farbschicht (13) aus einem an den benachbarten Schichten haftenden Material besteht.

6. Kennzeichnungsträger nach einem der Ansprüche 1 bis 5, dadurch **gekennzeichnet**, daß der Raster (5) aus einem an den benachbarten Schichten nicht oder nur geringfügig haftenden Material besteht.

7. Kennzeichnungsträger nach einem der Ansprüche 1 bis 6, dadurch **gekennzeichnet**, daß zwischen der Trägerfolie (1) und dem Kennzeichnungsaufdruck (7) eine nicht haftende Trennschicht (4) vorgesehen ist.

8. Kennzeichnungsträger nach Anspruch 7, dadurch **gekennzeichnet**, daß ein Randbereich der Trägerfolie (1) ringsum frei von der Trennschicht (4) ist.

9. Kennzeichnungsträger nach Anspruch 7, dadurch **gekennzeichnet**, daß die Trennschicht (4) mit Unterbrechungen (4b) versehen ist.

10. Kennzeichnungsträger nach Anspruch 7, dadurch **gekennzeichnet**, daß die Haftstärke des Rasters (5) zwischen derjenigen der Trennschicht (4) und derjenigen der Farbschicht (13) liegt.

11. Kennzeichnungsträger nach einem der Ansprüche 1 bis 10, dadurch **gekennzeichnet**, daß der Raster (5) gegen einfache Lösungsmittel empfindlich ist.

12. Kennzeichnungsträger nach einem der Ansprüche 1 bis 11, dadurch **gekennzeichnet**, daß die Farbschicht (13) gegen einfache Lösungsmittel im wesentlichen beständig oder gegen andere Lösungsmittel empfindlich ist als der Raster (5).

13. Kennzeichnungsträger nach einem der Ansprüche 1 bis 12, dadurch **gekennzeichnet**, daß die Trennschicht (4) gegen einfache Lösungsmittel empfindlich ist.

14. Kennzeichnungsträger nach einem der Ansprüche 1 bis 13, dadurch **gekennzeichnet**, daß die Farbschicht (13) in einem Randbereich (13c) ringsum durchgehend ausgebildet ist.

15. Kennzeichnungsträger nach einem der Ansprüche 1 bis 14, dadurch **gekennzeichnet**, daß die Kleberschicht (9) mit Unterbrechungen (9b) versehen ist.

16. Kennzeichnungsträger nach einem der Ansprüche 1 bis 15, dadurch **gekennzeichnet**, daß insbesondere die Trennschicht (4) mit gegen UV-Licht empfindlichen und/oder unter UV-Licht erkennbaren Bestandteilen versehen ist.

17. Kennzeichnungsträger nach einem der vorhergehenden Ansprüche, dadurch **gekennzeichnet**, daß in mindestens einer seiner Schichten ein elektronisch programmierbares und/oder lesbares Element angebracht ist.

## Claims

1. Tamperproof identification holder for vehicles, comprising a carrier foil (1) onto which an identification imprint (7), a grid (5) and a colour layer (13) are printed, with an adhesive layer (9) covering these layers, **characterized in that** the colour layer (13) is interrupted in a pattern complementary to the grid (5).

2. Identification holder according to claim 1, **characterized in that** the colour layer (13) and the grid (5) have the same colour shade.

3. Identification holder according to claim 1, **characterized in that** the colour elements (5a) of the grid (5) and the colour areas (13a) of the colour layer (13) slightly overlap each other.

4. Identification holder according to claim 1, **characterized in that** the colour layer (13) is imprinted onto the identification imprint (7) and the grid (5) is imprinted onto the colour layer (13).

5. Identification holder according to one of the claims 1 to 4, **characterized in that** the colour layer (13) comprises a material adhering to the adjacent layers.

6. Identification holder according to one of the claims 1 to 5, **characterized in that** the grid (5) consists of a material not adhering or only slightly adhering to the adjacent layers.

7. Identification holder according to one of the claims 1 to 6, **characterized in that** between the carrier foil (1) and the identification imprint (7) there is provided a non-adhesive separating layer (4).

8. Identification holder according to claim 7, **characterized in that** a marginal area of the carrier foil (1) peripherally is free of the separating layer.

9. Identification holder according to claim 7, **characterized in that** the separating layer (4) is provided with interruptions (4b).

10. Identification holder according to claim 7, **characterized in that** the adhesive strength of the grid (5) is between that of the separating layer (4) and that of the colour layer (13).

11. Identification holder according to one of the claims 1 to 10, **characterized in that** the grid (5) is sensitive to plain solvents.

12. Identification holder according to one of the claims 1 to 11, **characterized in that** the colour layer (13) is substantially resistent against plain solvents or is sensitive to other solvents than the grid (5).

13. Identification holder according to one of the claims 1 to 12, **characterized in that** the separating layer (4) is sensitive to plain solvents.

14. Identification holder according to one of the claims 1 to 13, **characterized in that** the colour layer (13) in a marginal area (13c) is formed peripherally continuous.

15. Identification holder according to one of the claims 1 to 14, **characterized in that** the adhesive layer (9) is provided with interruptions (9b).

16. Identification holder according to one of the claims 1 to 15, **characterized in that** particularly the separting layer (4) is provided with components sensitive to UV-light and/or recognisable under UV-light.

17. Identification holder according to one of the preceding claims, **characterized in that** in at least one of its layers there is provided an electronically programmable and/or readable element.

## Revendications

1. Support d'immatriculation pour véhicules protégé contre la falsification, consistant en un film-support (1) sur lequel sont imprimés une impression d'immatriculation (7), une trame (5) et une couche de couleur (13), ainsi qu'en une couche collante (9) recouvrant ces couches, caractérisé en ce que la couche de couleur (13) est interrompue selon un dessin complémentaire à la trame (5).

2. Support d'immatriculation selon la revendication 1, caractérisé en ce que la couche de couleur (13) et la trame (5) présentent la même teinte.

3. Support d'immatriculation selon la revendication 1, caractérisé en ce que les éléments de couleur (5a) de la trame (5) et les zones de couleur (13a) de la couche de couleur (13) chevauchent réciproquement légèrement.

4. Support d'immatriculation selon la revendication 1, caractérisé en ce que la couche de couleur (13) est imprimée sur l'impression d'immatriculation (7) et la trame (5) sur la couche de couleur (13).

5. Support d'immatriculation selon l'une quelconque des revendications 1 à 4, caractérisé en ce que la couche de couleur (13) consiste en un matériau adhérant aux couches voisines.

6. Support d'immatriculation selon l'une quelconque des revendications 1 à 5, caractérisé en ce que la trame (5) consiste en un matériau n'adhérant pas ou n'adhérant que faiblement aux couches voisines.

7. Support d'immatriculation selon l'une quelconque des revendications 1 à 6, caractérisé en ce qu'entre le film-support (1) et l'impression d'immatriculation (7) une couche de séparation (4) non-adhérante est prévue.

8. Support d'immatriculation selon la revendication 7, caractérisé en ce qu'une zone marginale du film-support (1) n'est pas recouverte par la couche de séparation (4) sur tout le pourtour.

9. Support d'immatriculation selon la revendication 7, caractérisé en ce que la couche de séparation (4) est pourvue d'interruptions (4b).

10. Support d'immatriculation selon la revendication 7, caractérisé en ce que le pouvoir collant de la trame (5) se situe entre celui de la couche de séparation (4) et celui de la couche de couleur (13).

11. Support d'immatriculation selon l'une quelconque des revendications 1 à 10, caractérisé en ce que la trame (5) est sensible à des solvants simples.

12. Support d'immatriculation selon l'une quelconque des revendications 1 à 11, caractérisé en ce que la couche de couleur (13) est essentiellement résistante aux solvants simples ou sensible à d'autres solvants que la trame (5).

13. Support d'immatriculation selon l'une quelconque des revendications 1 à 12, caractérisé en ce que la couche de séparation (4) est sensible aux solvants simples.

14. Support d'immatriculation selon l'une quelconque des revendications 1 à 13, caractérisé en ce que la couche de couleur (13) est formée sur tout le pourtour sans interruption dans une zone marginale (13c).

15. Support d'immatriculation selon l'une quelconque des revendications 1 à 14, caractérisé en ce que la couche collante (9) est pourvue d'interruptions (9b).

16. Support d'immatriculation selon l'une quelconque des revendications 1 à 15, caractérisé en ce que notamment la couche de séparation (4) est pourvue d'éléments qui sont sensibles à la lumière UV et/ou reconnaissables à la lumière UV.

17. Support d'immatriculation selon l'une quelconque des revendications précédentes, caractérisé en ce qu'au moins une de ces couches comporte un élément programmable et/ou lisible électroniquement.
